# EUROPÄISCHE PATENTSCHRIFT

(11) **EP 2 220 403 B1**
(45) Veröffentlichungstag und Bekanntmachung des Hinweises auf die Patenterteilung: **24.08.2011**
(21) Anmeldenummer: 08864585.8
(22) Anmeldetag: 04.12.2008
(51) Int. Cl.: F16H 61/22, F16H 59/10

(54) **BETÄTIGUNGSEINRICHTUNG MIT SPERRWALZE**
ACTUATING DEVICE HAVING A LOCKING ROLLER
DISPOSITIF DE COMMANDE À CYLINDRE DE BLOCAGE

(30) Priorität: 21.12.2007 DE 102007062824
(43) Veröffentlichungstag der Anmeldung: 25.08.2010
(73) Patentinhaber: ZF Friedrichshafen AG, 88038 Friedrichshafen (DE)
(72) Erfinder: GIEFER, Andreas, 49448 Lemförde (DE); RAKE, Ludger, 49356 Diepholz (DE); ROSENTRETER, Sascha, 32339 Espelkamp (DE)
(86) Internationale Anmeldenummer: PCT/DE2008/050038
(87) Internationale Veröffentlichungsnummer: WO 2009/080019

(56) Entgegenhaltungen:
- DE-A1- 10 059 383
- DE-A1-102005 023 926
- DE-A1-102005 033 510
- JP-A- 7 019 334
- US-A1- 2003 188 594
- US-A1- 2006 016 287

## Beschreibung

### Beschreibung

Die Erfindung betrifft eine Betätigungseinrichtung für ein Gangwechselgetriebe, beispielsweise für ein automatisiertes Schaltgetriebe mit shift-by-wire-Betätigung, gemäß dem Oberbegriff des Patentanspruchs 1, wie offenbart in der JP 7 019334 A.

Gangwechselgetriebe von Kraftfahrzeugen werden im allgemeinen mittels einer im Griffbereich des Fahrers angeordneten Betätigungseinrichtung geschaltet bzw. gesteuert. Regelmäßig kommen hierzu Betätigungselemente wie Schalthebel oder Wählhebel zum Einsatz, die beispielsweise zwischen den Frontsitzen des Kraftfahrzeugs oder in anderen Bereichen des Cockpits angeordnet sind.

Insbesondere im Fall der manuell geschalteten Getriebe werden bislang häufig noch rein mechanische Betätigungseinrichtungen und Übertragungsmittel zwischen dem Betätigungselement und dem Gangwechselgetriebe eingesetzt. Dabei kann es sich, wie beispielsweise in der JP 7 019334 A beschrieben, um mechanische Übertragungselemente wie Seilzüge oder Gestänge zwischen Betätigungselement und Getriebe handeln. Neuere Pkw-Schaltgetriebe weisen zumeist fünf oder sechs Vorwärtsgänge sowie einen Rückwärtsgang auf, wobei diese sechs oder sieben Schaltstellungen des Schalthebels im allgemeinen in Form eines H-Schaltschemas um eine zentrale, neutrale Mittelstellung des Schalthebels herum gruppiert angeordnet sind.

Ein H-Schaltschema für ein mechanisch betätigtes Schaltgetriebe benötigt jedoch aufgrund der am Getriebe erforderlichen Schalt- und Wählwege sowie aufgrund bestimmter, aus Gründen der Ergonomie nicht zu überschreitender Betätigungskräfte am Schalthebel - insbesondere im Vergleich zu einem Wählhebel eines Automatikgetriebes oder zu einer shift-by-wire-Schaltung für ein automatisiertes Getriebe - einen oftmals erheblich größeren Bauraum für das Betätigungssystem im Bereich des Fahrzeuginnenraums.

Dies bedeutet jedoch - da für verschiedene Varianten eines Fahrzeugs mit unterschiedlichen Getriebetypen auch unterschiedliche Betätigungssysteme vorgesehen werden müssen - dass damit auch der Fahrzeuginnenraum, beispielsweise im Bereich der Mittelkonsole, des Cockpits oder des Bodenblechs, je nach Fahrzeug-Getriebetyp und damit je nach dem verwendeten Betätigungssystem an den Bauraumbedarf des Betätigungssystems angepasst werden muss. Hiermit kann - je nach Typ des verwendeten Getriebes bzw. der verwendeten Betätigungseinrichtung - ein ggf. aufwändiger Änderungsbedarf an den genannten Baugruppen im Bereich des Fahrzeuginnenraums entstehen, was mit entsprechenden, hohen Kosten verbunden sein kann. Ein weiterer Nachteil, der mit der mechanischen Übertragung der Schaltbefehle zwischen der Betätigungseinrichtung und dem Gangwechselgetriebe des Kraftfahrzeugs verbunden sein kann, liegt in der Notwendigkeit der Durchtritte der entsprechenden Seilzüge bzw. Gestänge durch das Fahrzeug-Bodenblech, durch den Kardantunnel oder durch die Schottwand des Kraftfahrzeugs. Diese Durchtritte verursachen nicht nur ebenfalls konstruktiven Aufwand, sondern können zudem nachteilig in Bezug auf Geräuschentwicklung, Körperschallübertragung wie auch bezüglich Crashverhalten sein.

Es ist versucht worden, diese im Stand der Technik vorzufindenden Nachteile dadurch zu umgehen, indem Gangwechselgetriebe von Kraftfahrzeugen, darunter auch manuelle Schaltgetriebe, auf shift-by-wire-Betätigung umgestellt worden sind. Auf diese Weise sollte eine größere konstruktive Flexibilität bei der Gestaltung und Platzierung der Betätigungseinrichtung für das Getriebe im Fahrzeuginnenraum erreicht werden. Dank Wegfall mechanischer Übertragungsgestänge sowie raumgreifender mechanischer Betätigungshebel sollte auf diese Weise zudem ermöglicht werden, für alle Getriebevarianten eines Kraftfahrzeugs möglichst einheitliche Baugruppen insbesondere im Bereich des Cockpits, des Bodenblechs und der Mittelkonsole vorsehen zu können.

Auch bei shift-by-wire-Betätigungseinrichtungen für Kraftfahrzeuggetriebe besteht jedoch die Forderung, dem Fahrer aus Gründen der Sicherheit und Ergonomie ein realistisches Gefühl der Getriebebetätigung zu vermitteln. Daher ist es erforderlich, dass dem Fahrer bei der Getriebebetätigung nicht nur optische, sondern auch klare haptische bzw. taktile Rückmeldungen über den aktuellen Schalt- bzw. Betriebszustand des Getriebes vermittelt werden.

Dabei wird aus Gründen der Ergonomie und Sicherheit insbesondere gefordert, dass dem Fahrer etwaige momentan nicht zulässige Schaltzustände bzw. Schaltoperationen in Form entsprechender Sperrungen der zugehörigen Bedienpositionen des Schalthebels haptisch deutlich spürbar signalisiert werden, wie der Fahrer dies beispielsweise vom vollsynchronisierten mechanischen Schaltgetriebe mit dessen drehzahl- und geschwindigkeitsabhängigen Synchronsperren kennt und gewohnt ist.

Bei der elektrischen bzw. shift-by-wire-Betätigung von Gangwechselgetrieben existiert jedoch keine derartige mechanische Kopplung mehr zwischen dem Betätigungselement in der Fahrgastzelle und dem Kraftfahrzeuggetriebe im Motorraum. Vielmehr erfolgt die Übertragung der Schaltbefehle von der Betätigungseinrichtung zum Kraftfahrzeuggetriebe beim "shift-by-wire"-Getriebe mittels elektrischer oder elektronischer Signale und anschließender zumeist elektrohydraulischer Umsetzung der Schaltbefehle am Getriebe. Die fehlende mechanische Verbindung zwischen der Getriebeaktuatorik und dem Betätigungshebel führt dabei jedoch dazu, dass der Getriebezustand, etwaige Schaltsperren oder unzulässige Schaltbefehle nicht mehr direkt auf den Zustand des Betätigungshebels rückwirken können. Der Fahrer kann bei shift-by-wire-gesteuerten Getrieben somit nicht ohne weiteres anhand bestimmter am Betätigungshebel spürbar blockierter Schaltstellungen erkennen, dass Hebelstellungen, Fahrstufen bzw. Schaltbefehle im momentanen Fahrzustand eventuell nicht zulässig sind und somit auch nicht angewählt werden können.

In Abhängigkeit des Zustands des zu bedienenden Gangwechselgetriebes sowie in Abhängigkeit anderer Zustandsfaktoren am Kraftfahrzeug - z.B. Motordrehzahl, Fahrzeuggeschwindigkeit, Kupplungsstellung etc. - ist es zur Realisierung des erforderlichen haptischen Feedback bei shift-by-wire-gesteuerten Getrieben somit im allgemeinen notwendig, den Betätigungsbereich des Betätigungshebels je nach Getriebezustand aktuatorisch gesteuert zu begrenzen. Auf diese Weise kann dem Fahrer beim Griff nach dem Betätigungshebel auch bei einem shift-by-wire-gesteuerten Getriebe haptisch spürbar vermittelt werden, dass sein Schaltwunsch - beispielsweise aufgrund der aktuellen Geschwindigkeit des Kraftfahrzeugs bzw. aufgrund eines momentanen Betriebszustands des Gangwechselgetriebes - nicht zulässig und damit gesperrt ist. Somit lässt sich vermeiden, dass vom Getriebe aktuell nicht umsetzbare Schaltbefehle, die von der Getriebe-Elektronikeinheit erkannt und nicht an das Getriebe übermittelt werden, auch am Betätigungselement nicht eingelegt werden können, da Abweichungen zwischen dem tatsächlichen Getriebezustand und der am Betätigungselement eingelegten Schaltposition nicht zulässig sind.

Hierzu ist es erforderlich, dass der Fahrer auch bei einem shift-by-wire-gesteuerten Getriebe bereits beim Versuch einer entsprechenden Betätigung dieselbe haptische Rückmeldung erfährt wie bei einem mechanisch betätigten Getriebe - beispielsweise bei einem manuellen Schaltgetriebe mit Übertragungsgestänge - bei dem das Einlegen der einzelnen Gänge am Schalthebel spürbar insbesondere geschwindigkeitsabhängig gesperrt ist. Auf diese Weise wird das Einlegen momentan unzulässiger Gänge oder Fahrstufen, die vom Getriebe jeweils nicht geschaltet werden können, nicht nur elektronisch ignoriert, sondern bereits im Vorfeld der entsprechenden Betätigung durch eine mechanische Sperre am Betätigungselement unterbunden.

Wie zum Beispiel aus der US 2006/0016287 A1 oder aus der DE 10 2005 033 510 A1 ersichtlich, ist versucht worden, dementsprechende Sperren dadurch zu realisieren, dass Betätigungshebel von shift-by-wire-gesteuerten Gangwechselgetrieben mit mehreren bzw. mit mehrfachwirkenden Aktuatoren sowie mit entsprechenden Hebel- bzw. Getriebeelementen zur selektiven Sperrung unzulässiger Schaltbefehle versehen worden sind. Diese Aktuatoren und die damit gesteuerten Hebel- bzw. Getriebeelemente werden in Abhängigkeit des Fahrzeug- bzw. Getriebezustands geschaltet, um so den Gesamtbewegungsbereich des Betätigungselements entsprechend des momentanen Fahr- oder Getriebezustands einzuschränken.

Muss dabei jedoch eine Mehrzahl unterschiedlicher Hebelstellungen in unterschiedlichen Kombinationen aktuatorisch gesperrt werden, so ist hierzu im Stand der Technik häufig eine komplexe Sperrmimik erforderlich. Dies hat unerwünschte Auswirkungen aufgrund des damit verbundenen Aufwands und der entsprechenden Kostenfolgen. Auch können Probleme mit dem zur Verfügung stehenden Bauraum im Bereich der Betätigungseinrichtung wie auch im Hinblick auf Energieverbrauch und Wärmeentwicklung auftreten.

Dies gilt insbesondere dann, wenn bei einer shift-by-wire-Betätigungseinrichtung beispielsweise ein H-Schaltschema zur Steuerung eines automatisierten Schaltgetriebes realisiert werden soll. Letzteres ist mit den aus dem Stand der Technik bekannten Sperrvorrichtungen insbesondere deshalb kaum zu realisieren, da ein H-Schaltschema nicht nur zwei, sondern bis zu vier nebeneinander liegende Schaltgassen aufweisen kann, in denen Schaltpositionen zustandsabhängig entweder gesperrt oder freigegeben werden müssen.

Mit diesem Hintergrund ist es Aufgabe der vorliegenden Erfindung, eine Betätigungseinrichtung mit Sperrvorrichtung zu schaffen, insbesondere für die elektrische bzw. elektronische shift-by-wire-Betätigung eines Gangwechselgetriebes, mit der sich die genannten Nachteile des Standes der Technik überwinden lassen. Die Sperreinrichtung soll dabei auch im Fall einer komplexen Sperrlogik einfach aufgebaut sein, und es sollen rasche Schaltzeiten, geringe Störanfälligkeit, niedriger Energieverbrauch und eine geringe Geräuschentwicklung erreicht werden. Ferner soll die Betätigungseinrichtung mit einem möglichst geringen Bauraum auskommen, und es sollen Kosteneinsparungen sowohl gegenüber der herkömmlichen mechanischen Schaltbefehlübertragung als auch gegenüber den aus dem Stand der Technik bekannten shift-by-wire-Betätigungseinrichtungen erzielt werden.

Diese Aufgabe wird durch eine Betätigungseinrichtung mit den Merkmalen des Patentanspruchs 1 gelöst.

Bevorzugte Ausführungsformen sind Gegenstand der Unteransprüche.

In für sich genommen zunächst bekannter Weise umfasst die Betätigungseinrichtung gemäß der vorliegenden Erfindung einen - innerhalb mindestens einer Schaltgasse bewegbaren - Schalthebel mit zumindest drei Schaltstellungen sowie eine Sperrvorrichtung. Dabei dient die Sperrvorrichtung zur steuerbaren Einschränkung des Bewegungsbereichs des Schalthebels, zum Ausschluss bestimmter Schalthebelstellungen oder zur Blockierung des Schalthebels, insbesondere in Abhängigkeit vom Schaltzustand des Getriebes oder vom Fahrzustand des Kraftfahrzeugs.

Erfindungsgemäß zeichnet sich die Betätigungseinrichtung jedoch dadurch aus, dass die Sperrvorrichtung eine in zumindest einer aktuatorisch rotierbaren Sperrwalze angeordnete Sperrkammeranordnung mit zumindest einer Sperrkammer aufweist. Zudem besitzt der Schalthebel zumindest einen Sperrnocken, wobei der Sperrnocken mit der Sperrkammeranordnung in Eingriff bringbar ist, indem er in die Sperrkammer eintaucht und so die Bewegung des Schalthebels - insbesondere in Abhängigkeit der momentan wirksamen Tiefe der Sperrkammer - ermöglicht oder einschränkt.

Ferner weist die Sperrkammeranordnung der zumindest einen Speerrwalze mehrere entlang der Rotationsachse der Sperrwalze angeordnete Sperrkammern auf.

Gegenüber dem Stand der Technik, aus dem vor allem Betätigungseinrichtungen bekannt sind, die entweder Aktuatoren mit mehreren Betriebsstellungen (wie beispielsweise doppeltwirkende Elektromagneten), eine Mehrzahl von Aktuatoren oder aber komplizierte Sperrmimiken mit diversen Getriebeelementen aufweisen, kann dank der erfindungsgemäßen Sperrwalze zunächst einmal eine erhebliche konstruktive Vereinfachung der Betätigungseinrichtung erfolgen. Dabei ist dennoch eine große konstruktive Freiheit bezüglich der Gestaltung der gewünschten Bewegungsbereiche bzw. Anzahl der Schaltstufen für den Schalthebel gegeben, die lediglich durch die weitgehend freie Formgebung der Sperrkammeranordnung in der Sperrwalze begrenzt ist.

Dank der Erfindung kann die mechanische Übertragung der Schaltbefehle von der Betätigungseinrichtung an das Getriebe mittels Seilzügen oder Gestängen somit weitgehend universell bei allen Getriebetypen bzw. bei allen Typen von Betätigungseinrichtungen durch die Übertragung der Schaltbefehle auf elektronischem Wege ersetzt werden, wobei gleichzeitig die von der mechanischen Schaltbefehlübertragung bekannte Haptik erhalten bleibt. Dies gilt insbesondere für das haptische Feedback des Schalthebels bezüglich nicht zulässiger Schaltbefehle außerhalb eines bestimmten Relativdrehzahl- bzw. Geschwindigkeitsfensters.

Mit der Erfindung ergeben sich demzufolge erheblich größere konstruktive Freiheiten bei der Gestaltung und Platzierung der Betätigungseinrichtung im Fahrzeuginnenraum bzw. Fahrzeugcockpit. Denn die Sperrkammeranordnung kann geometrisch weilgehend frei gestaltet werden, wodurch sich nahezu beliebige Bewegungsbereiche mit nahezu beliebig vielen unterschiedlichen Schaltpositionen für den Schalthebel definieren lassen. Ferner kann die erfindungsgemäße Betätigungseinrichtung durch einfachen Austausch der Sperrwalze - im Sinne eines modularen Baukastensystems - an unterschiedlichste Fahrzeuggetriebe bzw. Kundenanforderungen angepasst werden, ohne dass eine Umkonstruktion der gesamten Betätigungseinrichtung oder gar der umgebenden Baugruppen am Kraftfahrzeug erforderlich würde. Dank der Erfindung werden somit maßgebliche Kosten- und Bauraumeinsparungen ermöglicht. Verwirklichen lässt sich die Erfindung zunächst einmal unabhängig davon, wie die zumindest eine Sperrwalze und die darin untergebrachte Sperrkammeranordnung ausgeführt, konstruktiv ausgebildet und angeordnet werden, solange die vorgesehene Interaktion der Sperrkammeranordnung mit dem zumindest einen Sperrnocken des Schalthebels gewährleistet ist.

Vorzugsweise umfasst die Betätigungseinrichtung ferner nicht nur eine, sondern zwei aktuatorisch rotierbare Sperrwalzen, und der Schalthebel weist zwei einander bezüglich der Schalthebelachse gegenüberliegende Sperrnocken auf. Dabei ist dem ersten Sperrnocken des Schalthebels die Sperrkammeranordnung der ersten Sperrwalze und dem zweiten Sperrnocken des Schalthebels die Sperrkammeranordnung der zweiten Sperrwalze zugeordnet. Auf diese Weise lassen sich Bewegungen des Schalthebels ausgehend von einer Mittelstellung sowohl fahrtrichtungsbezogen nach vorn als auch nach hinten aktuatorisch kontrollieren bzw. sperren.

Bei dem Schalthebel handelt es sich dabei vorzugsweise um einen multistabilen Schalthebel, der im Unterschied zum monostabilen Schalthebel prinzipiell in jeder seiner Schaltstellungen verbleibt, wenn er nach der Betätigung losgelassen wird. Dank mehrerer entlang der Rotationsachse nebeneinander angeordneter Sperrkammern sowie dank zweier aktuatorisch rotierbarer Sperrwalzen lassen sich somit - insbesondere beim multistabilen Schalthebel - komplette Schaltschemata von mechanischen Wähl- bzw. Schalthebeln auch bei einer shift-by-wire-Betätigung vollständig realisieren.

Insbesondere kann dank der Ausführungsform der erfindungsgemäßen Betätigungseinrichtung, die zwei Sperrwalzen mit jeweils mehreren nebeneinander angeordnete Sperrkammern aufweist, das komplette H-Schaltschema des Schalthebels eines manuell betätigten Schaltgetriebes nachvollzogen und realistisch simuliert werden. Hierzu werden für jede der bis zu vier nebeneinanderliegenden Schaltgassen eines üblichen H-Schaltschemas - mit fünf bis sechs Vorwärtsgängen und einem Rückwärtsgang - jeweils eigene Sperrkammern auf jeder der beiden Sperrwalzen vorgesehen. Auf diese Weise können die jeweils zulässigen Bewegungsbereiche für jede der beispielsweise vier Schaltgassen des H-Schaltschemas separat festgelegt und gesteuert werden, indem jeder Schaltgasse eine Paarung zugehöriger Sperrkammern auf den beiden Sperrwalzen zugeordnet wird.

Das dank der Erfindung somit auch auf das Gebiet der shift-by-wire-Schaltungen übertragbare Prinzip des konventionellen H-Schaltschemas ist dem Fahrer von der früheren mechanischen Betätigung beim Schaltgetriebe wohlvertraut, weshalb infolge des mit der Erfindung ermöglichten H-Schaltschemas Fehlbedienungen auch bei einem shift-by-wire-gesteuerten Schaltgetriebe weitgehend ausgeschlossen werden können.

Die Ansteuerung der zumindest einen, vorzugsweise zwei Sperrwalzen erfolgt dabei gemäß einer besonders bevorzugten Ausführungsform der Erfindung in Abhängigkeit von der Fahrzeuggeschwindigkeit. Auch diese Ausführungsform steht im Dienst der möglichst vollständigen Realisierung des dem Fahrer vertrauten H-Schaltschemas bei einem shift-by-wire-gesteuerten Gangwechselgetriebe, wie beispielsweise bei einem by-wire-geschalteten Doppelkupplungsgetriebe oder bei einem elektrohydraulisch betätigten Schaltgetriebe.

Gemäß einer weiteren bevorzugten Ausführungsform der Erfindung weist zumindest eine der Sperrkammern, vorzugsweise jedoch alle Sperrkammern der Betätigungseinrichtung, an zumindest einem ihrer Enden einen rampenartigen Auslauf bis zur Oberfläche der Sperrwalze auf. Auf diese Weise lässt sich mit geringstmöglichem Aufwand und unter konstruktiver Doppelnutzung der Sperrwalze zusätzlich eine zuverlässige aktuatorische Rückstellbarkeit des Schalthebels in die Mittel- bzw. Neutralposition verwirklichen. Hierdurch lässt sich - insbesondere bei manuell geschalteten Getriebeautomaten - eine Getriebebetätigung realisieren, die beim Abstellen bzw. Verlassen des Kraftfahrzeugs unabhängig von der an der Getriebebetätigung tatsächlich eingelegten Gangstufe selbsttätig die Parksperre im Getriebe einlegt (Auto-P), um ein Wegrollen des abgestellten Kraftfahrzeugs zu unterbinden.

Dank dieser Ausführungsform, die eine aktuatorische Rückführung des Schalthebels in die Mittel- bzw. Neutralposition ermöglicht, lässt sich somit vermeiden, dass sich der Schalthebel beim nächsten Fahrtbeginn in einer nicht mit dem Getriebezustand "Parksperre" übereinstimmenden Stellung befindet.

Denn wurde der Schalthebel beim Verlassen des Fahrzeugs in einer der Schaltstellungen belassen, so würde die Schalthebelstellung im Fall von Auto-P beim nächsten Fahrtantritt nicht mehr mit dem tatsächlichen Schaltzustand des Getriebes (Parksperre) übereinstimmen. Bei der Rückkehr zum Fahrzeug, bzw. bei einem Startversuch des Fahrzeugs würde anhand der Schalthebelstellung daher optisch zunächst eine unzutreffende Information an den Fahrer gegeben. Anhand der Wahrnehmung der Schalthebelstellung müsste der Fahrer davon ausgehen, dass sich das Gelriebe in einer Fahrstufenstellung befindet, während im Getriebe hingegen tatsächlich die Parksperre eingelegt ist.

Um eine solche Fehlinformation des Fahrers zu verhindern, müsste somit eigens eine zusätzliche Signaleinrichtung für den Fahrer vorgesehen werden, die dem Fahrer für den Fall der per Auto-P eingelegten Parksperre signalisiert, dass das Fahrzeug erst gestartet werden kann, wenn der Schalthebel zunächst einmal manuell in die Mittel- bzw. Neutralposition gebracht wird. Eine solche Signaleinrichtung ist dank dieser Ausführungsform der Erfindung und der damit ermöglichten aktuatorischen Rückführung des Schalthebels jedoch nicht notwendig.

Die Ausführungsform der Erfindung mit zwei Sperrwalzen und zwei Sperrnocken lässt sich zunächst einmal unabhängig davon verwirklichen, wie der aktuatorische Antrieb der beiden Sperrwalzen erfolgt. So können die beiden Sperrwalzen beispielsweise jeweils einen eigenen aktuatorischen Antrieb aufweisen oder über Zahnräder gekoppelt sein. Gemäß einer besonders bevorzugten Ausführungsform der Erfindung zeichnet sich die Betätigungseinrichtung jedoch durch einen gemeinsamen aktuatorischen Antrieb für die beiden Sperrwalzen aus. Bevorzugt sind dabei die beiden Sperrwalzen sowie der beiden Sperrwalzen gemeinsame aktuatorische Antrieb über einen Zahnriemen miteinander gekoppelt, wobei der gemeinsame aktuatorische Antrieb der beiden Sperrwalzen vorzugsweise durch einen Servomotor gebildet ist.

Diese Ausführungsformen ermöglichen eine kostensparende Gestaltung der Betätigungseinrichtung mit lediglich einem einzigen elektromotorischen Aktuator, der jedoch nichtsdestotrotz sämtliche unterschiedlichen Betätigungssperren des Schalthebels - beispielsweise in den verschiedenen Schaltgassen eines H Schaltschemas - gezielt ansteuern kann.

Ferner kann vorgesehen sein, dass an zumindest einer Sperrwalze ein Rotationswinkelsensor angeordnet ist. Dies ermöglicht den Antrieb und die zuverlässige Einstellung der für die jeweilige Sperre erforderlichen Rotationswinkelstellung der Sperrwalze bzw. Sperrwalzen auch mittels eines vergleichsweise einfachen Elektromotors, der somit ohne eigene Sensorik auskommen kann.

Des Weiteren kann vorgesehen sein, , dass an zumindest einer Sperrwalze eine Rückholfeder angeordnet ist. Die Rückholfeder, die beispielsweise in Form einer Spiralbandfeder ausgeführt sein kann, ermöglicht eine Betätigung des Schalthebels insbesondere auch beim etwaigen Ausfall des aktuatorischen Antriebs der Sperrwalzen, bzw. nach dem Ausschalten der Zündung. In diesem Fall werden die Sperrwalzen mittels der in der Rückholfeder gespeicherten Energie in eine vorbestimmte Position zurückgedreht, in welcher sämtliche Betätigungsstellungen des Schalthebels angewählt werden können.

Im Folgenden wird die Erfindung anhand lediglich Ausführungsbeispiele darstellender Zeichnungen näher erläutert. Es zeigt:
- **Fig. 1**: in schematischer isometrischer Ansicht die Sperrvorrichtung einer Ausführungsform einer Betätigungseinrichtung gemäß der vorliegenden Erfindung, Blickrichtung auf den Zahnriemenantrieb;
- **Fig. 2**: in einer **Fig**. **1** entsprechenden Darstellung die Sperrvorrichtung gemäß **Fig. 1**, Blickrichtung auf Sperrwalzen und Aktuatorantrieb;
- **Fig. 3**: in einer **Fig**. **2** entsprechenden Darstellung und Ansicht die Sperrvorrichtung gemäß **Fig. 2****,** Schalthebel ausgelenkt und Sperrnocken in Sperrkammer eingetaucht;
- **Fig. 4**: in einer schematischen, teilweise geschnittener Seitenansicht die Sperrvorrichtung gemäß **Fig. 2** und **3****,** Schalthebel wie in **Fig. 3** ausgelenkt;
- **Fig. 5**: in einer schematischen, isometrischen Ansicht die fahrtrichtungsbezogen hintere Sperrwalze;
- **Fig. 6**: in einer **Fig. 5** entsprechenden Darstellung und Ansicht die fahrtrichtungsbezogen vordere Sperrwalze mit Rückholfeder; und
- **Fig. 7**: Belegungstabelle der Sperrkammern für die Sperrwalzen gemäß **Fig. 5** und **6****.**

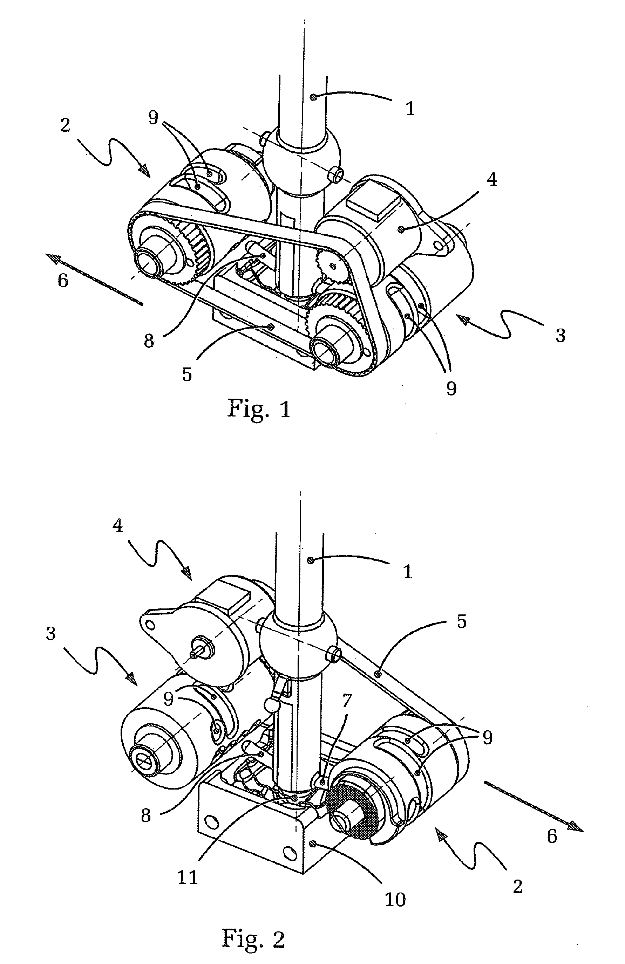

**Fig. 1** zeigt in schematisch ausgeführter isometrischer Darstellung die Sperrvorrichtung für eine Ausführungsform einer Betätigungseinrichtung gemäß der vorliegenden Erfindung mit Blickrichtung auf den Zahnriemenantrieb. Man erkennt zunächst einmal den (aus Platzgründen nur teilweise dargestellten) Schalthebel 1, die Sperrwalzen 2 und 3 sowie den elektromotorischen Antrieb 4 und dessen Zahnriementrieb 5 zur Steuerung der Rotation der Sperrwalzen 2 und 3. Der Richtungspfeil 6 veranschaulicht die für diese Ausführungsform geltende Fahrtrichtung des Kraftfahrzeugs.

**Fig. 2** stellt die Situation gemäß **Fig. 1** aus der entgegengesetzten Blickrichtung mit Blick auf die Sperrwalzen 2, 3 und den Elektromotor 4 dar. Insbesondere in **Fig. 2** erkennt man die am Schalthebel 1 angeordneten, bei diesem Ausführungsbeispiel einstückig mit dem Schalthebel 1 ausgebildeten Sperrnocken 7, 8. Die Sperrnocken 7, 8 sind so angeordnet, dass sie bei Schwenkbewegungen des Schalthebels 1 in die entsprechenden Sperrkammern 9 der Sperrwalzen 2, 3 eintauchen können.

Je nach der Rotationswinkelstellung der Sperrwalzen 2, 3 - wobei die Rotationswinkelstellung über den Zahnriementrieb 5 durch den Servoaktuator 4 gesteuert wird - kommt gegenüber den Sperrnocken 7, 8 des Schalthebels 1 eine unterschiedliche Anordnung von Sperrkammern 9 zur Wirkung, wodurch in Abhängigkeit von der Rotationswinkelstellung der Sperrwalzen 2, 3 die entsprechenden Schaltbewegungen des Schalthebels 1 freigegeben oder gesperrt werden können.

In **Fig. 2** gut erkennbar ist außerdem die Rastkulisse 10 sowie der in der Rastkulisse 10 geführte, axial angefederte Rastierpin 11. Rastkulisse 10 und Rastierpin 11 dienen der definierten Führung und der Erzeugung der aus Gründen der Ergonomie bzw. Schaltlogik erforderlichen Rastier- und Rückstellkräfte bei der Bewegung des Schalthebels 1.

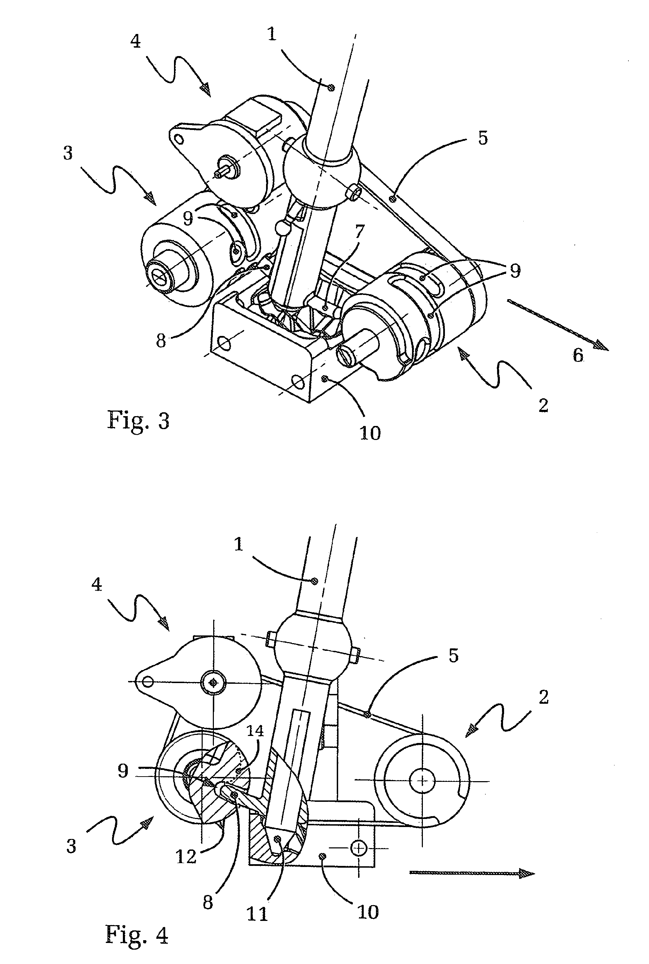

Das Eintauchen der Sperrnocken 7, 8 in die entsprechenden Sperrkammern 9 der Sperrwalzen 2, 3 ist in den **Fig. 3** und **4** dargestellt. In den **Fig. 3** und **4** erkennt man zunächst einmal den fahrtrichtungsbezogen 6 nach vorne geschwenkten Schalthebel 1. Durch das Schwenken des Schalthebels 1 wird auch der Sperrnocken 8 verschwenkt und taucht in eine der Sperrkammern 9 der fahrtrichtungsbezogen hinteren Sperrwalze 3 ein, sofern sich diese in einer passenden Rotationswinkelstellung befindet.

Soll die in den **Fig. 3** und **4** dargestellte Schwenkbewegung des Schalthebels 1 jedoch unterbunden bzw. für den Fahrer spürbar gesperrt werden - beispielsweise aufgrund einer nicht zum entsprechenden Schaltbefehl passenden Fahrzeuggeschwindigkeit oder Relativdrehzahl im Getriebe - so wird der Aktuatorantrieb 4 von der Getriebeelektronik so angesteuert, dass dem Sperrnocken 8 keine passenden Sperrkammer 9 gegenüber steht, in die er eintauchen könnte. Der Sperrnocken 8 kommt in diesem Fall beim Versuch der entsprechenden Betätigung des Schalthebels 1 an der glatten Oberfläche 12 der Sperrwalze 3 zum Anschlag. Hierdurch wird dem Fahrer haptisch deutlich signalisiert, dass der Schalthebel derzeit nicht in die beabsichtigte Richtung bewegt werden kann, da dies einem aktuell unzulässigen Schaltbefehl entsprechen würde (beispielsweise der Einlegung des zweiten Gangs bei hoher Fahrzeuggeschwindigkeit, oder des Rückwärtsgangs, solange das Fahrzeug noch nicht zum Stillstand gekommen ist).

Bei Seitwärtsbewegungen des Schalthebels 1 quer zur Fahrtrichtung stehen den Sperrnocken 7, 8 des Schalthebels 1 jeweils unterschiedliche Paarungen an Sperrkammern 9 der beiden Sperrwalzen 2, 3 gegenüber. Auf diese Weise können - insbesondere fahrtgeschwindigkeitsabhängig - für die unterschiedlichen Schaltgassen des Schalthebels 1 jeweils unterschiedliche Schaltpositionen zugelassen bzw. gesperrt werden, ohne dass die Sperrwalzen 2, 3 bei jedem Schaltgassenwechsel des Schalthebels 1 in eine andere Rotationswinkelstellung verbracht werden müssten.

**Fig. 4** zeigt nochmals deutlich den Vorgang des Eintauchens des Sperrnockens 8 in eine der Sperrkammern 9 der fahrtrichtungsbezogen hinteren Sperrwalze 3 gemäß **Fig. 3****.** In **Fig. 4** gut ersichtlich ist in ferner auch die Rastkulisse 10 sowie der in der Rastkulisse 10 gleitende, im Schalthebel 1 axial angefedert bewegliche Rastierpin 11. Zudem ist in **Fig. 4** eine mögliche Ausführungsform des rampenartigen Auslaufs der Sperrkammer 9 anhand der strichlierten Linie 14 schematisch angedeutet. Mittels der beispielsweise spiralig ausgeformten zur Rampe 14 lässt sich der Schalthebel 1 durch aktuatorische Rotation der Sperrwalze 3 zurück in seine Mittelstellung gemäß Fig. 1 und 2 bewegen.

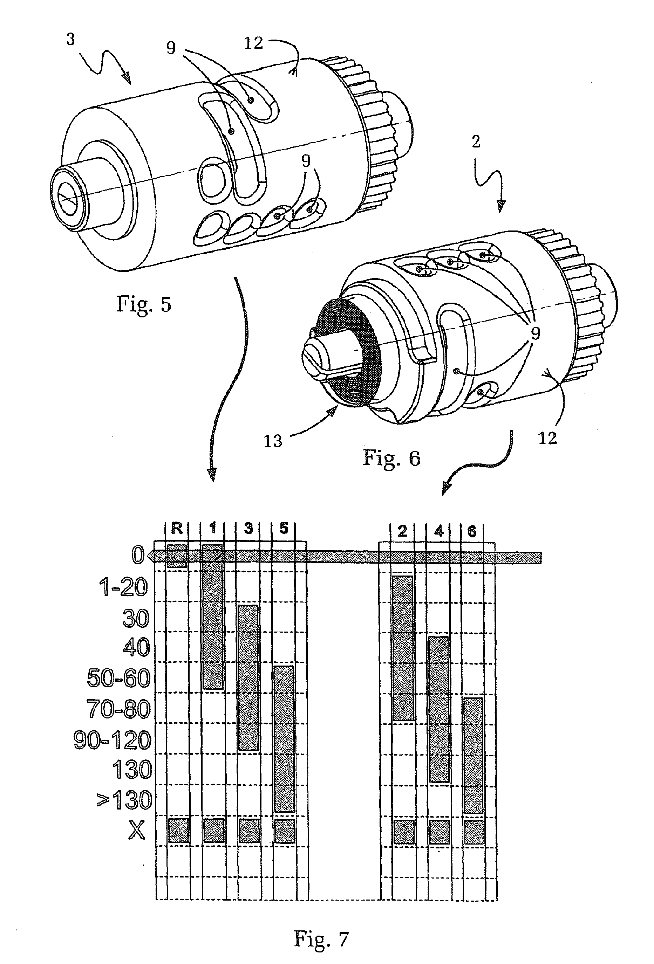

Die **Fig. 5** und **6** zeigen die beiden Sperrwalzen 3 und 2 nochmals in vergrößerter Ansicht. Man erkennt, dass die Sperrwalze 2 mit einer spiraligen Rückholfeder 13 versehen ist. Die Rückholfeder 13 wird durch den elektromotorischen Antrieb 4 der beiden Sperrwalzen 2 und 3 vorgespannt und dient bei einem etwaigen Systemausfall einer automatischen Rückstellung der beiden Sperrwalzen 2, 3 in die Grundstellung, in welcher sämtliche Schaltpositionen des Schalthebels 1 angewählt werden können, da in der Grundstellung der Sperrwalzen 2, 3 für jede Schaltposition des Schalthebels 1 eine entsprechende Sperrkammer 9 für die Sperrnocken 7, 8 vorhanden ist.

Dieser Grundstellung der Sperrwalzen 2, 3 entspricht die mit X bezeichnete Zeile in der Tabelle gemäß **Fig. 7****.** Die Spaltenüberschrift "R 1 3 5 - 2 4 6" der Tabelle gemäß **Fig. 7** bezeichnet die Zuordnung der einzelnen am Schalthebel 1 anwählbaren Gangstufen zu den auf den zugehörigen Sperrwalzen 3 bzw. 2 angeordneten jeweiligen Sperrkammern 9. Die Zeilenüberschriften zwischen "0" und ">130" stehen für die Fahrzeuggeschwindigkeitsbereiche, bei denen durch den Aktuator 4 die jeweils zugehörige Rotationswinkelstellung der beiden Sperrwalzen 3 (linke Hälfte der Tabelle) bzw. 2 (rechte Hälfte der Tabelle) angefahren wird.

Anhand der Tabelle wird deutlich, dass beispielsweise beim Stillstand des Fahrzeugs der Rückwärtsgang und der erste Gang eingelegt werden können, während alle anderen Schaltstellungen gesperrt sind. Bei einer Geschwindigkeit zwischen 50 und 60 km/h können diese Ausführungsform alle Gänge außer dem Rückwärtsgang und dem sechsten Gang gewählt werden, während bei Geschwindigkeiten über 130 km/h nur noch der fünfte oder sechste Gang gewählt werden kann, wohingegen alle anderen Gänge mittels Anschlag der Sperrnocken 7, 8 an den glatten Oberflächen 12 der beiden Sperrwalzen 2, 3 außerhalb der Sperrkammern 9 gesperrt sind. In der Grundstellung "X", die die beiden Sperrwalzen beispielsweise bei einem Ausfall des Antriebs 4 dank der Rückholfeder 13 automatisch einnehmen, ist für jede der Schaltpositionen des Schalthebels 1 eine entsprechende Sperrkammer 9 in den beiden Sperrwalzen vorgesehen, so dass in der Grundstellung "X" sämtliche Schaltpositionen angewählt werden können.

Die Fahrzeuggeschwindigkeitsbereiche, in denen bestimmte Schaltbetätigungen zulässig und andere ausgeschlossen sind, lassen sich dabei anhand entsprechender Änderungen an den Sperrwalzen 2, 3 mit minimalem Aufwand an entsprechende Fahrzeugvarianten oder Kundenpräferenzen anpassen.

Im Ergebnis wird somit deutlich, dass mit der Erfindung eine Betätigungseinrichtung geschaffen wird, die gegenüber dem Stand der Technik insbesondere den Vorteil aufweist, dass sie auch im Fall komplexer Sperraufgaben mit vergleichsweise geringem konstruktivem Aufwand auskommt. Wesentliche Vorteile werden in Form einer Minimierung der Bauraumanforderungen, einer geringen Geräuschentwicklung sowie in Form von kurzen Schaltzeiten bei gleichzeitig geringer Störanfälligkeit erreicht. Insbesondere bei H-Schaltschemata werden Kosteneinsparungen und konstruktive Vorteile sowohl gegenüber der mechanischen Schaltbefehlübertragung als auch gegenüber den aus dem Stand der Technik bekannten shift-by-wire-Betätigungseinrichtungen erzielt. Für den Fahrer wird eine zuverlässige taktile Rückmeldung über den tatsächlichen Schaltzustand und über die aktuellen zulässigen Schaltbefehle erzielt.

Insbesondere dank des einfachen, modularisierbaren Aufbaus leistet die Erfindung somit einen zentralen Beitrag zur Erhöhung der baureihenübergreifenden Kosteneffektivität und zur Verbesserung von Ergonomie und Sicherheit bei Betätigungseinrichtungen für Kraftfahrzeuggetriebe.

### Bezugszeichenliste

- 1: Schalthebel
- 2, 3: Sperrwalze
- 4: Elektromotor, Aktuator
- 5: Zahnriemenantrieb
- 6: Fahrtrichtung
- 7, 8: Sperrnocken
- 9: Sperrkammer
- 10: Rastkulisse
- 11: Rastierpin
- 12: Walzenoberfläche
- 13: Rückholfeder
- 14: Auslauframpe

## Patentansprüche

1. Betätigungseinrichtung zur Auswahl von Schaltstufen eines Gangwechselgetriebes, die Betätigungseinrichtung umfassend einen zwischen zumindest drei Schaltstellungen bewegbaren Schalthebel (1) sowie eine Sperrvorrichtung zur Einschränkung des Bewegungsbereichs des Schalthebels (1), zum Ausschluss bestimmter Schalthebelstellungen bzw. zur Blockierung des Schalthebels (1), wobei die Sperrvorrichtung eine in zumindest einer aktuatorisch rotierbaren Sperrwalze (2, 3) angeordnete Sperrkammeranordnung mit zumindest einer Sperrkammer (9), und der Schalthebel (1) zumindest einen Sperrnocken (7, 8) aufweist, wobei der zumindest eine Sperrnocken (7, 8), in die zumindest eine Sperrkammer (9) eintauchend und den Bewegungsbereich des Schalthebels (1) einschränkend, mit der Sperrkammeranordnung in Eingriff bringbar ist,
**dadurch gekennzeichnet,**
**dass** die Sperrkammeranordnung der zumindest einen Sperrwalze (2, 3) mehrere entlang der Rotationsachse der Sperrwalze (2, 3) nebeneinander angeordnete Sperrkammern (9) aufweist.

2. Betätigungseinrichtung nach Anspruch 1,
**dadurch gekennzeichnet,**
**dass** die Sperrvorrichtung zwei aktuatorisch rotierbare Sperrwalzen (2, 3) und der Schalthebel (1) zwei einander bezüglich der Schalthebelachse gegenüberliegende Sperrnocken (7, 8) aufweist, wobei dem ersten Sperrnocken (7) die Sperrkammeranordnung der ersten Sperrwalze (2) und dem zweiten Sperrnocken (8) die Sperrkammeranordnung der zweiten Sperrwalze (3) zugeordnet ist.

3. Betätigungseinrichtung nach einem der Ansprüche 1 oder 2,
**dadurch gekennzeichnet,**
**dass** der Schalthebel (1) multistabil ist.

4. Betätigungseinrichtung nach einem der Ansprüche 1 bis 3,
**dadurch gekennzeichnet,**
**dass** die Ansteuerung der zumindest einen Sperrwalzen (2, 3) in Abhängigkeit von der Fahrzeuggeschwindigkeit erfolgt.

5. Betätigungseinrichtung nach einem der Ansprüche 1 bis 4,
**dadurch gekennzeichnet,**
**dass** zumindest eine der Sperrkammern (9) einer Sperrkammeranordnung an zumindest einem ihrer Enden einen rampenartigen Auslauf (14) zur Oberfläche der zumindest einen Sperrwalze (2, 3) aufweist, wodurch der Schalthebel (1) mittels des rampenartigen Auslaufs (14) durch Rotation der zumindest einen Sperrwalze (2, 3) aktuatorisch bewegt werden kann.

6. Betätigungseinrichtung nach Anspruch 2,
**gekennzeichnet durch**
einen gemeinsamen aktuatorischen Antrieb (4) für die beiden Sperrwalzen (2, 3).

7. Betätigungseinrichtung nach Anspruch 6,
**dadurch gekennzeichnet,**
**dass** die beiden Sperrwalzen (2, 3) sowie der aktuatorische Antrieb (4) über einen gemeinsamen Zahnriemen (5) miteinander gekoppelt sind.

8. Betätigungseinrichtung nach Anspruch 6 oder 7,
**dadurch gekennzeichnet,**
**dass** der gemeinsame aktuatorische Antrieb durch einen Servomotor (4) gebildet ist.

## Claims

1. Actuating device for the selection of shift stages of a gearshift transmission, the actuating device comprising a shift lever (1) which is movable between at least three shift positions and also comprising a blocking device for restricting the range of movement of the shift lever (1), for excluding certain shift lever positions and/or for blocking the shift lever (1), the blocking device having a blocking chamber arrangement which is arranged in at least one blocking roller (2, 3) rotatable under actuator power and which has at least one blocking chamber (9), and the shift lever (1) having at least one blocking cam (7, 8), it being possible for the at least one blocking cam (7, 8) to be brought into engagement with the blocking chamber arrangement so as to protrude into the at least one blocking chamber (9) and restrict the range of movement of the shift lever (1),
**characterized**
**in that** the blocking chamber arrangement of the at least one blocking roller (2, 3) has a plurality of blocking chambers (9) arranged adjacent to one another along the axis of rotation of the blocking roller (2, 3).

2. Actuating device according to Claim 1, **characterized**
**in that** the blocking device has two blocking rollers (2, 3) rotatable under actuator power and the shift lever (1) has two blocking cams (7, 8) situated opposite one another with respect to the shift lever axis, the blocking chamber arrangement of the first blocking roller (2) being assigned to the first blocking cam (7) and the blocking chamber arrangement of the second blocking roller (3) being assigned to the second blocking cam (8).

3. Actuating device according to either of Claims 1 and 2,
**characterized**
**in that** the shift lever (1) is multistable.

4. Actuating device according to one of Claims 1 to 3,
**characterized**
**in that** the actuation of the at least one blocking roller (2, 3) takes place as a function of the vehicle speed.

5. Actuating device according to one of Claims 1 to 4,
**characterized**
**in that** at least one of the blocking chambers (9) of a blocking chamber arrangement has, on at least one of its ends, a ramp-like run-out (14) to the surface of the at least one blocking roller (2, 3), as a result of which the shift lever (1) can be moved under actuator power by means of the ramp-like run-out (14) as a result of rotation of the at least one blocking roller (2, 3).

6. Actuating device according to Claim 2,
**characterized by**
a common actuator drive (4) for the two blocking rollers (2, 3).

7. Actuating device according to Claim 6,
**characterized**
**in that** the two blocking rollers (2, 3) and the actuator drive (4) are coupled to one another by means of a common toothed belt (5).

8. Actuating device according to Claim 6 or 7,
**characterized**
**in that** the common actuator drive is formed by a servo motor (4).

## Revendications

1. Dispositif d'actionnement pour la sélection de rapports de changement de vitesse d'une boîte de vitesse, le dispositif d'actionnement comprenant un levier de sélection (1) déplaçable entre au moins trois positions de commutation ainsi qu'un dispositif de verrouillage pour limiter la plage de déplacement du levier de sélection (1), pour exclure des positions de levier de sélection déterminées ou pour verrouiller le levier de sélection (1), le dispositif de verrouillage présentant un agencement de chambre de verrouillage disposé dans au moins un cylindre de verrouillage (2, 3) à commande en rotation par un actionneur, comprenant au moins une chambre de verrouillage (9), et le levier de sélection (1) présentant au moins une came de verrouillage (7, 8), l'au moins une came de verrouillage (7, 8) pouvant être amenée en prise avec l'agencement de chambre de verrouillage, en plongeant dans l'au moins une chambre de verrouillage (9) et en limitant la plage de déplacement du levier de sélection (1),
**caractérisé en ce que**
l'agencement de chambre de verrouillage de l'au moins un cylindre de verrouillage (2, 3) présente plusieurs chambres de verrouillage (9) disposées les unes à côté des autres le long de l'axe de rotation du cylindre de verrouillage (2, 3).

2. Dispositif d'actionnement selon la revendication 1,
**caractérisé en ce que**
le dispositif de verrouillage présente deux cylindres de verrouillage (2, 3) à commande en rotation par un actionneur, et le levier de sélection (1) présente deux cames de verrouillage (7, 8) opposées l'une à l'autre par rapport à l'axe du levier de sélection, l'agencement de chambre de verrouillage du premier cylindre de verrouillage (2) étant associé à la première came de verrouillage (7) et l'agencement de chambre de verrouillage du deuxième cylindre de verrouillage (3) étant associé à la deuxième came de verrouillage (8).

3. Dispositif d'actionnement selon l'une quelconque des revendications 1 ou 2,
**caractérisé en ce que**
le levier de sélection (1) est multistable.

4. Dispositif d'actionnement selon l'une quelconque des revendications 1 à 3,
**caractérisé en ce que**
la commande de l'au moins un cylindre de verrouillage (2, 3) a lieu en fonction de la vitesse du véhicule.

5. Dispositif d'actionnement selon l'une quelconque des revendications 1 à 4,
**caractérisé en ce**
**qu'**au moins l'une des chambres de verrouillage (9) d'un agencement de chambre de verrouillage présente, sur au moins l'une de ses extrémités, une terminaison (14) en forme de rampe vers la surface de l'au moins un cylindre de verrouillage (2, 3), de sorte que le levier de sélection (1) puisse être déplacé par un actionneur au moyen de la terminaison (14) en forme de rampe par la rotation de l'au moins un cylindre de verrouillage (2, 3) .

6. Dispositif d'actionnement selon la revendication 2,
**caractérisé par**
un entraînement commun par actionneur (4) pour les deux cylindres de verrouillage (2, 3).

7. Dispositif d'actionnement selon la revendication 6,
**caractérisé en ce que**
les deux cylindres de verrouillage (2, 3) ainsi que l'entraînement par actionneur (4) sont accouplés les uns aux autres par le biais d'une courroie dentée commune (5).

8. Dispositif d'actionnement selon la revendication 6 ou 7,
**caractérisé en ce que**
l'entraînement par actionneur commun est formé par un servomoteur (4).
